# EUROPEAN PATENT APPLICATION

(11) **EP 2 789 457 A1**
(43) Date of publication of application: **15.10.2014**
(21) Application number: 12856108.1
(22) Date of filing: 07.12.2012
(51) Int. Cl.: B29D 30/08, B29D 30/14, B29D 30/30

(54) **TIRE-FORMING MACHINE CONNECTOR APPARATUS AND CONNECTOR HANDLING METHOD THEREFOR**

(30) Priority: 07.12.2011 CN 201110402783
(71) Applicant: Yuan, Zhongxue, Shandong 266042 (CN)
(72) Inventor: YUAN, Zhongxue, Shandong 266042 (CN); CHENG, Jiguo, Shandong 266042 (CN); ZHOU, Fude, Shandong 266042 (CN); SHAO, Rui, Shandong 266042 (CN); DAI, Chunhai, Shandong 266042 (CN)
(74) Representative: Rentsch Partner AG
(86) International application number: PCT/CN2012/086143
(87) International publication number: WO 2013/083069

(57) **Abstract**

The invention discloses a joint device for a tire forming machine and a joint treatment method thereof. A composite part laminating device and a cord fabric stitching device are integrally arranged on a same connection frame, and related execution mechanisms are conveyed to the appointed workstations on a tire body drum through a top conveyer, so that the quantity of components and the required installation space are simplified on the whole. The joint device comprises a joint device connection frame, a composite part laminating device, and a cord fabric stitching device, wherein the joint device connection frame axially slides along a portal frame through a connection frame drive device, and is located above the vertical direction of a tire body drum; the composite part laminating device is carried on a joint device connection frame through a composite part frame body; the composite part laminating device comprises an axial laminating drive device and a vertical laminating drive device for controlling and driving a compression roller component to be located on a composite workstation on the tire body drum; the cord fabric stitching device is carried on the joint device connection frame through a main stitching frame; the cord fabric stitching device comprises an axial stitching drive device and a vertical stitching drive device for controlling and driving a stitching wheel component to be located on a stitching workstation on the tire body drum.

## Description

Field of the invention The invention discloses a joint device for a tire forming machine and a joint treatment method thereof. Particularly, a composite part laminating device and a cord fabric stitching device are integrally arranged on a same connection frame, laminating and stitching execution mechanisms are conveyed to the related operation workstations by the connection frame through a top conveyer, and the joint device belongs to the field of rubber machinery.

Background of the invention Aiming at rubber tires matched with kinds of vehicles at present, a steel wire tire bead, a tire body component and a belted layer-tread component are prepared into tires by adopting a forming machine by the processes such as laminating, anti-package and the like.

Preparation of the tire body component is usually finished on the tire body drum, and then the tire body component is conveyed to the forming drum in the device and technique for manufacturing the tire billet. In the process of preparing the tire body component, a laminating operation needs to be carried out on the overlapping part between an inside liner and glue at two tire sides by adopting the laminating device, so as to extrude and discharge air bubbles; a stitching operation needs to be carried out on the joint of subsequently attached tire body cord fabric by adopting the stitching device.

For example, the above existing tire forming machine, the laminating device and the stitching device for successively carrying out action are separately installed, and the respectively controlled through respectively execution mechanisms, so as to independently finish the operation on the tire body drum. Therefore, the use defects and disadvantages exist as follows:
1. The laminating device and the stitching device are independent mechanisms, need to be respectively installed at the positions near the tire body drum, and also need large installation space and travel distance to avoid effect, so that, simplification and miniaturization design of the overall structure of the forming machine are not facilitated;
2. The laminating device and the stitching device are controlled by respective execution mechanisms, so that two sets of locating device needs to be arranged to respectively calibrate and center operation workstations on the tire body drum, control of equipment cost is not facilitated, and the centering accuracy is difficulty improved;
3. The laminating device and the stitching device universally carry out movement between different workstations by virtue of guide of a ground guide rail, a potential safety hazard caused by collision of an operator and equipments is easily generated when a large surface installation area is occupied, and corresponding demands on the ground flatness are high, so that improvement of the operation accuracy is not facilitated.

Based on the content, the existing joint device of the forming device adopts separate installation and separate control modes, operation components are transported and located by virtue of the ground guide rail, resulting in the defects and disadvantages in the existing use procedure in fact. The difference of the tire billet production technologies is determined by the differences of the structures and control modes of these components, and the requirements on the tire forming quality and the production efficiency cannot be completely achieved.

For the purpose, the patent application is particularly proposed.

### Invention content

The invention discloses a joint device for a tire forming machine and a joint treatment method thereof, and aims at solving the defects of the prior art. A composite part laminating device and a cord fabric stitching device are integrally arranged on a same connection frame, and related execution mechanisms are conveyed to the appointed workstations on a tire body drum through a top conveyer, so that the quantity of components and required installation space are simplified on the whole. A drive mechanism finishes component location in the air, so as to clear the related ground conveying components, facilitate control and auxiliary operations of an operator in the tire billet manufacturing process, and avoid an accident caused by collision of the operator and the equipment.

Another purpose of the invention is as follows: the composite part laminating device and the cord fabric stitching device carry out calibrating and centering on the basis of the same locating device by virtue of the same connection frame, and the centering accuracy is high in comparison with the operation workstation of the tire body drum.

The purpose of the invention also is that two operation flows of laminating of the composite part and stitching of the tire body cord fabric are integrated, shortening of the operation time and improvement of the production efficiency of the single tire billet are facilitated.

In order to achieve the purposes, the joint device for the tire forming machine mainly comprises:
A compression roller component for carrying out the laminating operation aiming at the inside liner and the tire sides for forming the tire billet,
A stitching wheel component for carrying out joint stitching aiming at the cord fabric. Compared with the prior art, the differences are that: the joint device also comprises:
   A joint device connection frame, which is connected to a top portal frame in a sliding manner, axially slides along the portal frame through a connection frame drive device, and is located above the vertical direction of a tire body drum;
   A composite part laminating device, which is carried on the joint device connection frame through a composite part frame body, and comprises an axial laminating drive device and a vertical laminating drive device for controlling and driving a compression roller component to be located on a composite workstation on the tire body drum and achieving the laminating operation;
   A cord fabric stitching device, which is carried on the joint device connection frame through a main stitching bracket, and comprises an axial stitching drive device and a vertical stitching drive device for controlling and driving a stitching wheel component to be located on a stitching workstation on the tire body drum and achieving the joint stitching operation.

For example, the basic scheme, the composite part laminating device and the cord fabric stitching device are carried on the joint device connection frame;

The joint device connection frame finishes axial conveying of the compression roller component and the stitching wheel component above the vertical direction of the tire body drum through the top portal frame, so that the overall joint device is compact in structure, and does not occupy the surface area, and the accident caused by collision of the operator and the equipment can be effectively avoided.

On the basis of the design and concept of the invention, the joint device connection frame achieves axial sliding and locating; the composite part laminating device controls and drives the compression roller component to be located to the composite workstation; there are may be a plurality of drive and guide mechanisms corresponding to the composite part laminating device for controlling and driving the compression roller component to be located on the composition workstation and the cord fabric stitching device for controlling and driving the stitching wheel component to be located on the stitching workstation, for example, drive devices such as a cylinder, a gear motor, a cylinder and the like are adopted, and guide mechanisms in the transmission processes of screw-nut, lead screw-nut, synchronous belt- synchronous pulley, gear-rack and the like are adopted.

The improvement scheme aiming at the joint device connection frame is as follows, the joint device connection frame comprises:
A main bracket, which is arranged in parallel to the portal frame;
A lateral connection frame, which is connected with the main bracket and used for carrying the composite part laminating device and the cord fabric stitching device.

The drive device applied to the joint device connection frame comprises a first cylinder which is connected between the joint device connection frame and the portal frame and used for pushing the joint device connection frame along the axial direction of the portal frame;

A plurality of slide frames are connected to two sides of the main bracket; slide blocks arranged at the inner sides of the slide frames are meshed with slide rails on the portal frame.

In the joint device connection frame, the first cylinder is a drive device for achieving axial sliding and locating along the portal frame while the slide frames achieve sliding guide by virtue of the slide blocks and the slide rails, so as to improve the smoothness of the joint device connection frame in the overall sliding process.

The main bracket provides a bearing platform through which the composite part laminating device and the cord fabric stitching device axially slide from the initial positions, and are located above the vertical direction of the tire body drum.

The composite part laminating device and the cord fabric stitching device are successively carried out and carried on the same joint device connection frame, and the problem of switching between two execution mechanisms and two operation workstations must be solved. The improvement scheme can be adopted as follows: a second cylinder for connecting and longitudinally pushing the lateral connection frame in a reciprocating manner is arranged on the side part of the main bracket;

The composite part laminating device and the cord fabric stitching device can be orderly moved and located above the vertical center line of the tire body drum by controlling the stroke and the advance direction of the second cylinder; the composite part laminating device and the cord fabric stitching device are driven to advance to the operation workstations by respective axial drive device and the vertical drive device, so as to finish respective laminating operation and stitching operation.

In order to further improve the locating accuracy of the move strokes of the composite part laminating device and the cord fabric stitching device, the refining measures can be adopted as follows: two pairs of hydraulic buffers for limiting the longitudinal reciprocating displacement distance of the lateral connection frame can be arranged at the side part of the main bracket.

When the composite part laminating device or the cord fabric stitching device is respectively pushed to above the operation workstation on the tire body drum by the lateral connection frame, the lateral connection frame can be limited and buffered through the hydraulic buffers; the locating accuracy of the composite part laminating device or the cord fabric stitching device can be correspondingly improved by improving the mechanical manufacturing accuracy between the portal frame, the main bracket and the lateral connection frame.

The structure improvement design scheme aiming at the composite part laminating device is as follows: the composite part frame body is arranged on the lateral connection frame of the joint device connection frame; the axial laminating drive device comprises a first motor arranged on the composite part frame body; an output shaft of the first motor is connected with a first synchronous pulley on a first synchronous belt which is transversely arranged along the composite part frame body; the first synchronous belt is also connected with a connection plate for installing the compression roller component;

The vertical laminating drive device comprises a pair of third cylinders which is arranged between the lateral connection frame and the composite part frame body and used for pushing and pulling the composite part frame body in the reciprocating manner along the vertical direction.

The structure improvement scheme aiming at the cord fabric stitching device is as follows: a main stitching bracket is arranged on the lateral connection frame of the joint device connection frame; the axial stitching drive device comprises a second motor which is arranged on the main stitching bracket; the output shaft of the second motor is connected with a second synchronous pulley sleeved on a second synchronous belt; the second synchronous belt is also connected with a third synchronous pulley on a screw which is transversely arranged along the main stitching bracket;

The stitching wheel component is arranged on a pair of movable brackets; the movable brackets are connected with a nut sleeved on the screw;

The vertical stitching drive device comprises a pair of fourth cylinders, which is arranged on the movable brackets and connected with the stitching wheel component.

Based on the structure improvement aiming at the joint device for the tire forming machine, the joint treatment method is also simultaneously achieved by the invention as follows:
The compression roller component is adopted to carry out the laminating operation on the inside liner and the tire side rubber attached to the tire body drum;
The stitching wheel component is adopted to carry out the joint stitching operation on the subsequently attached tire body cord fabric.

Compared with the prior art, the difference is as follows: the joint device connection frame is connected to the top portal frame in a sliding manner, axially slides along the portal frame and is located above the vertical direction of the tire body drum;

The composite part laminating device with the compression roller component is carried on the joint device connection frame; the compression roller component is located on the composite workstation on the tire body drum along the axial direction and the vertical direction of the joint device connection frame;

The cord fabric stitching device with the stitching wheel component is carried on the joint device connection frame, and the stitching wheel component is located on the stitching workstation on the tire body drum along the axial direction and the vertical direction of the joint device connection frame.

In order to achieve switching of operation workstations between the composite laminating device and the cord fabric stitching device, a pair of second cylinder for longitudinally pushing the lateral connection frame in the reciprocating manner is arranged at the side part of the main bracket of the joint device connection frame;

The composite part laminating device and the cord fabric stitching device are alternatively located on the vertical center line of the tire body drum.

In order to improve the switching accuracy of the operation workstations between the composite part laminating device and the cord fabric stitching device, two pairs of hydraulic buffers are arranged at the side parts of the main bracket of the joint device connection frame to limit the displacement distances of the composite part laminating device and the cord fabric stitching device along the longitudinal direction.

By combination of the improvements of the joint treatment method, the joint treatment method comprises the implementation steps as follows:
The joint device connection frame slides along the axial direction of the portal frame and is located above the vertical direction of the tire body drum;
The composite part laminating device is arranged on the vertical center line of the tire body drum; the compression roller component descends to the composite workstation at one side end of the tire body drum along the vertical direction, and moves to the other side end of the tire body drum along the axial direction, so as to finish the laminating operation on the inside liner and the tire side rubber;
The compression roller component ascends to the initial position along the vertical direction;
The second cylinder pushes the lateral connection frame to longitudinally move, so as to locate the cord fabric stitching device on the vertical center line of the tire body drum;
The stitching wheel component descends to the stitching workstation of the tire body drum along the vertical direction and moves in the reciprocating manner along the axial direction of the tire body drum, so as to finish the joint stitching operation on the tire body cord fabric;
The stitching wheel component ascends to the initial position along the vertical direction;
The joint device connection frame reversely slides to the initial position along the axial direction of the top portal frame;
The second cylinder reversely pushes the lateral connection frame along the longitudinal direction, so as to enable the composite part laminating device and the cord fabric stitching device to slide to the initial positions.

To sum up the above contents, the joint device for the tire forming machine and the joint treatment method thereof have the advantages as follows:
1. The composite part laminating device and the cord fabric stitching device are integrally arranged on a same connection frame, so that the quantity and required installation space of the related components of the forming machine are simplified on the whole, clearing of the related ground conveying components is facilitated, control and auxiliary operations of the operator in the tire billet manufacturing process are facilitated, and the accident caused by collision of the operator and the equipment is avoided;
2. The laminating device and the stitching device carry out calibrating and centering on the basis of the same locating device by virtue of the same connection frame, and the centering accuracy is high in comparison with the operation workstation of the tire body drum;
3. Two operation flows of laminating of the composite part and stitching of the tire body cord fabric can be integrated, and shortening of the operation time and improvement of the production efficiency of the single tire billet are facilitated;
4. Pipeline pavement of ground equipments can be simplified, and overall installation, debugging and inspection of the forming machine by the operator are facilitated.

### Description of figures

The joint device for the tire forming machine is further described by combining with the figures as follows:
The figure 1 is the structure diagram of the main machine part of the forming machine;
The figure 2 is the overall structure diagram of the joint device;
The figure 3 is the lateral diagram of the joint device connection frame;
The figure 4 is the structure diagram of the composite part laminating device;
The figure 5 is the bent structure diagram of the figure 4;
The figure 6 is the structure diagram of the cord fabric stitching device.

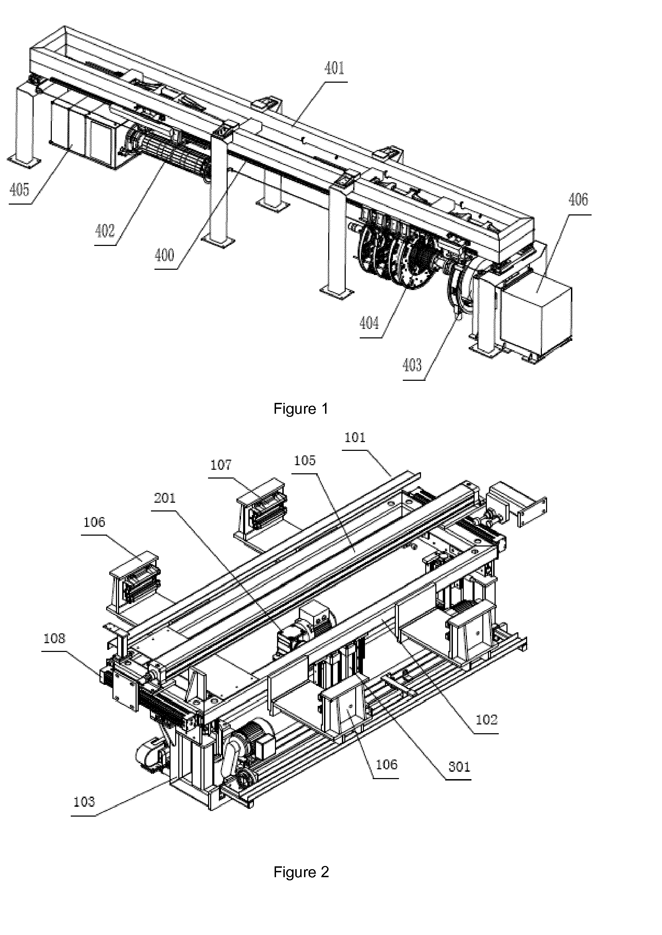

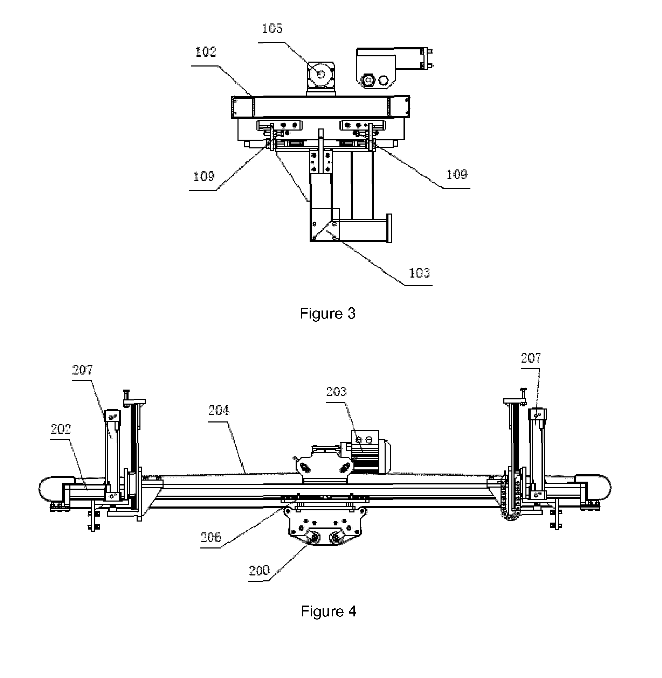

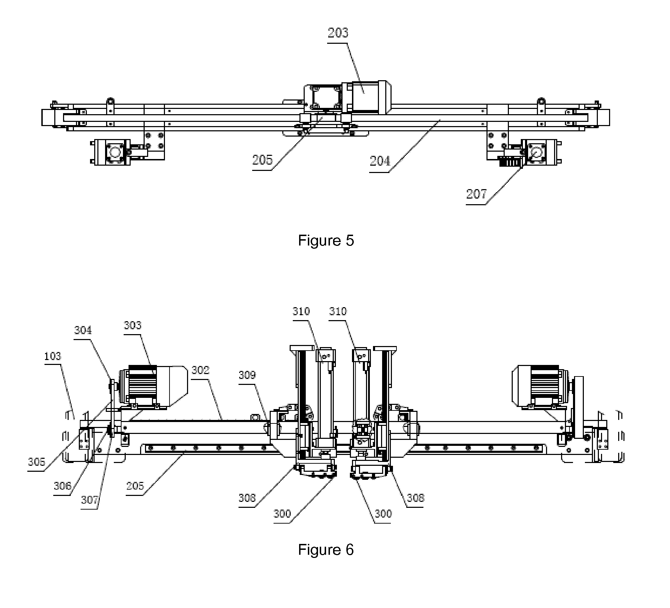

As shown in the figures 1 to 6, a joint device connection frame 101, a main bracket 102, a lateral connection frame 103, first cylinders 105, slide frames 106, slide blocks 107, second cylinders 108, hydraulic buffers 109,

A compression roller component 200, a composite part laminating device 201, a composite part frame body 202, a first motor 203, a first synchronous belt 204, a first synchronous pulley 205, a connection plate 206, third cylinders 207,

A stitching wheel component 300, a cord fabric stitching device 301, a main stitching bracket 302, a second motor 303, a second synchronous pulley 304, a second synchronous belt 305, a screw 306, a third synchronous pulley 307, movable brackets 308, a nut 309, fourth cylinders 310,

Slide rails 400, a portal frame 401, a tire body drum 402, a belted layer drum 403, a forming drum 404, a tire body drum drive unit 405, and a forming drum drive unit 406.

### Concrete implementation modes

Embodiment 1, as shown in the figure 1, the tire forming machine of applying the embodiment mainly comprises a tire body drum 402, a belted layer drum 403 and a forming drum 404, which are arranged on the same horizontal axis;

A feeding system of the tire body drum 402 comprises a main feeding frame and a pad rubber feeding frame (not shown in the figure) arranged at two sides; the drive unit of the tire body drum 402 is a tire body drum drive unit 405 which is coaxially arranged at the outer side of the tire body drum 402.

The forming drum 404 and the belted layer drum 403 are carried by the same forming drum drive unit 406 arranged at the outer side of the belted layer drum 403.

The portal frame 401 for conveying material is arranged above the vertical direction of the main machine of the overall forming machine; a pair of slide rails 400 is arranged at two sides of the portal frame 401.

As shown in the figures 2 to 6, the joint device of the tire forming machine comprises a joint device connection frame 101, a composite part laminating device 201 and a cord fabric stitching device 301;

The joint device connection frame 101 is connected to the top portal frame 401 in a sliding manner, axially slides along the portal frame 401 through the connection frame drive device, and is located above the vertical direction of the tire body drum 402;

The joint device connection frame 101 comprises the main bracket 102 and the lateral connection frame 103, wherein the main bracket 102 is arranged in parallel to the portal frame 401; the lateral connection frame 103 is connected with the main bracket 102 and used for carrying the composite part laminating device 201 and the cord fabric stitching device 301;

The connection frame drive device comprises first cylinders 105 arranged on the main frame 102; the output shafts of the first cylinders 105 are connected to the portal frame 401; the first cylinder 105 can axially push the main frame 102 along the portal frame 401 when acting, so as to simultaneously move and locate the composite part laminating device 201 and the cord fabric stitching device 301 carried on the lateral connection frame 103 above the vertical direction of the tire body drum 402.

A plurality of slide frames 106 are connected to two sides of the main bracket 102; the slide blocks 107 arranged at the inner sides of the slide frames 106 are meshed with the slide rails 400 on the portal frame 401.

The second cylinders 108 for connecting and longitudinally pushing the lateral connection frame 103 in the reciprocating manner, and two pairs of hydraulic buffers 109 for limiting the longitudinal reciprocating displacement distance of the lateral connection frame 103 are arranged at the side parts of the main bracket 102.

The composite part laminating device 201 is carried on the lateral connection frame 103 of the joint device connection frame 101 through a composite part frame body 202.

The composite part frame body 201 comprises an axial laminating drive device and a vertical laminating drive device for controlling and driving the compression roller component 200 to be located on a composite workstation on the tire body drum 402 and achieving the laminating operation.

The compression roller component 200 is used for carrying out the laminating operation on the inside liner and the tire sides for forming the tire billet.

The axial stitching drive device comprises a first motor 203 which is arranged on the composite part frame body 202; the output shaft of the first motor 203 is connected with the first synchronous pulley 205 on the first synchronous belt 204 which is transversely arranged along the composite part frame body 202; the first synchronous belt 204 is also connected with a connection plate 206 for installing the compression roller component 200;

The vertical laminating drive device comprises a pair of third cylinders 207 which is arranged between the lateral connection frame 103 and the composite part frame body 202, and used for pushing and pulling the composite part frame body 202 along the vertical direction in the reciprocating manner.

The cord fabric stitching device 301 is carried on the lateral connection frame 103 of the joint device connection frame 101 through the main stitching bracket 302.

The cord fabric stitching device 301 comprises an axial stitching drive device and a vertical stitching drive device for controlling and driving a stitching wheel component 300 to be located on a stitching workstation on the tire body drum 402 and achieving the joint stitching operation.

The stitching wheel component 300 is used for carrying out joint stitching aiming at the cord fabric.

The axial stitching drive device comprises a second motor 303 which is arranged on the main stitching bracket 302; the output shaft of the second motor 303 is connected to a second synchronous pulley 304 sleeved on the second synchronous belt 305; the second synchronous belt 305 is also connected with a third synchronous belt 307 arranged on the screw 306 which is transversely arranged along the main stitching bracket 302;

The stitching wheel component 300 is arranged on a pair of movable brackets 308; the movable brackets 308 are connected with the nut 309 sleeved on the screw 306;

The vertical stitching drive device comprises a pair of fourth cylinders (310) which is arranged on the movable brackets 308 and connected with the stitching wheel component 300.

As shown in the figures 1 to 6, the joint treatment method of the tire forming machine comprises the steps as follows: the compression roller component 200 is adopted to carry out the laminating operation on the inside liner and the tire side rubber attached to the tire body drum 402; the stitching wheel component 300 is adopted to carry out the joint stitching operation on the subsequently attached tire body cord fabric;

The joint device connection frame 101 is connected to the top portal frame 401 in a sliding manner, axially slides along the portal frame 401 and is located above the vertical direction of the tire body drum 402;

The composite part laminating device 201 with the compression roller component 200 is carried on the joint device connection frame 101; the compression roller component 200 is located on the composite workstation on the tire body drum 402 along the axial direction and the vertical direction of the joint device connection frame 101;

The cord fabric stitching device 301 with the stitching wheel component 300 is carried on the joint device connection frame 101, and the stitching wheel component 300 is located on the stitching workstation on the tire body drum 402 along the axial direction and the vertical direction of the joint device connection frame 101.

The drive and control method improvement scheme aiming at the joint device connection frame 101, a pair of second cylinders 108 for longitudinally pushing the lateral connection frame 103 in the reciprocating manner is arranged at the side part of the main bracket 102 of the joint device connection frame 101;

The composite part laminating device 201 and the cord fabric stitching device 301 are alternatively located on the vertical center line of the tire body drum 402.

In addition, two pairs of hydraulic buffers 109 are arranged at the side parts of the main bracket 102 of the joint device connection frame 101 to limit the displacement distances of the composite part laminating device 201 and the cord fabric stitching device 301 along the longitudinal direction.

The joint treatment method mainly comprises the implementation steps as follows:
The joint device connection frame 101 slides along the axial direction of the portal frame 401 and is located above the vertical direction of the tire body drum 402;
The composite part laminating device 201 is arranged on the vertical center line of the tire body drum 402; the compression roller component 200 descends to the composite workstation at one side end of the tire body drum 402 along the vertical direction, and moves to the other side end of the tire body drum 402 along the axial direction, so as to finish the laminating operation on the inside liner and the tire side rubber;
The compression roller component 200 ascends to the initial position along the vertical direction;
The second cylinder 108 pushes the lateral connection frame 103 to longitudinally move, so as to locate the cord fabric stitching device 301 on the vertical center line of the tire body drum 402;
The stitching wheel component 300 descends to the stitching workstation of the tire body drum 402 along the vertical direction and moves in the reciprocating manner along the axial direction of the tire body drum 402, so as to finish the joint stitching operation on the cord fabric of the tire body;
The stitching wheel component 300 ascends to the initial position along the vertical direction;
The joint device connection frame 101 reversely slides to the initial position along the axial direction of the top portal frame 401;
The second cylinder 108 reversely pushes the lateral connection frame 103 along the longitudinal direction, so as to enable the composite part laminating device 201 and the cord fabric stitching device 301 to slide to the initial positions.

## Claims

1. A joint device for a tire forming machine, comprising a compression roller component (200) which is used for carrying out a laminating operation aiming at an inside liner and tire sides for forming a tire billet, and a stitching wheel component (300) which is used for carrying out joint stitching aiming at cord fabric, the joint device is **characterized by** comprising:
A joint device connection frame (101), which is connected to a top portal frame (401) in a sliding manner, axially slides along the portal frame (401) through a connection frame drive device, and is located above the vertical direction of a tire body drum (401);
A composite part laminating device (201), which is carried on the joint device connection frame (101) through a composite part frame body (202), and comprises an axial laminating drive device and a vertical laminating drive device for controlling and driving the compression roller component (200) to be located on a composite workstation on the tire body drum (402) and achieving a laminating operation;
A cord fabric stitching device (301), which is carried on the joint device connection frame (101) through a main stitching bracket (302), and comprises an axial stitching drive device and a vertical stitching drive device for controlling and driving a stitching wheel component (300) to be located on a stitching workstation on the tire body drum (402) and achieving a joint stitching operation.

2. The joint device for the tire forming machine according to claim 1, **characterized in that** the joint device connection frame (101) comprises a main bracket (102) and a lateral connection frame (103); the main bracket (102) is arranged in parallel to the portal frame (401); the lateral connection frame (103) is connected with the main bracket (102) and used for carrying the composite part laminating device (201) and the cord fabric stitching device (301);
The connection frame drive device comprises a first cylinder (105) which is arranged between the joint device connection frame (101) and the portal frame (401) and used for axially pushing the joint device connection frame (101) along the portal frame (401);
A plurality of slide frames (106) are connected to two sides of the main bracket (102); slide blocks (107) arranged at the inner sides of the slide frames (106) are meshed with slide rails (400) on the portal frame (401).

3. The joint device for the tire forming machine according to claim 2, **characterized in that** a second cylinder (108) for connecting and longitudinally pushing the lateral connection frame (103) in a reciprocating manner is arranged on the side part of the main bracket (102).

4. The joint device for the tire forming machine according to claim 3, **characterized in that** two pairs of hydraulic buffer (109) for limiting the longitudinal reciprocating motion distance of the lateral connection frame (103) are arranged at the side part of the main bracket (102).

5. The joint device for the tire forming machine according to claims 1 to 4, **characterized in that** a composite part frame body (202) of the composite part laminating device (201) is arranged on the lateral connection frame (103) of the joint device connection frame (101);
The axial laminating drive device comprises a first motor (203) arranged on the composite part frame body (202); an output shaft of the first motor (203) is connected with a first synchronous pulley (205) on a first synchronous belt (204) which is transversely arranged along the composite part frame body (202); the first synchronous belt (204) is also connected with a connection plate (206) for installing the compression roller component (200);
The vertical laminating drive device comprises a pair of third cylinders (207) which is arranged between the lateral connection frame (103) and the composite part frame body (202) and used for pushing and pulling the composite part frame body (202) in the reciprocating manner along the vertical direction.

6. The joint device for the tire forming machine according to claims 1 to 4, **characterized in that** a main stitching bracket (302) of the cord fabric stitching device (301) is arranged on the lateral connection frame (103) of the joint device connection frame (101);
The axial stitching drive device comprises a second motor (303) which is arranged on the main stitching bracket (302); the output shaft of the second motor (303) is connected with a second synchronous pulley (304) sleeved on a second synchronous belt (305); the second synchronous belt (305) is also connected with a third synchronous pulley (307) on a screw (306) which is transversely arranged along the main stitching bracket (302);
The stitching wheel component (300) is arranged on a pair of movable brackets (308); the movable brackets (308) are connected with a nut (309) sleeved on the screw (306);
The vertical stitching drive device comprises a pair of fourth cylinders (310), which is arranged on the movable brackets (308) and connected with the stitching wheel component (300).

7. A joint treatment method achieved by the joint device for the tire forming machine according to claims 1 to 6, wherein the compression roller component (200) is adopted to carry out the laminating operation on the inside liner and the tire side rubber attached to the tire body drum (402);
The stitching wheel component (300) is adopted to carry out the joint stitching operation on the subsequently attached tire body cord fabric; the joint treatment method is **characterized by** comprising the steps as follows:
The joint device connection frame (101) is connected to the top portal frame (401) in a sliding manner, axially slides along the portal frame (401) and is located above the vertical direction of the tire body drum (402);
The composite part laminating device (201) with the compression roller component (200) is carried on the joint device connection frame (101); the compression roller component (200) is located on the composite workstation on the tire body drum (402) along the axial direction and the vertical direction of the joint device connection frame (101);
The cord fabric stitching device (301) with the stitching wheel component (300) is carried on the joint device connection frame (101), and the stitching wheel component (300) is located on the stitching workstation on the tire body drum (402) along the axial direction and the vertical direction of the joint device connection frame (101).

8. The joint treatment method for the tire forming machine according to claim 7, **characterized in that** a pair of second cylinders (108) for longitudinally pushing the lateral connection frame (103) in the reciprocating manner is arranged at the side part of the main bracket (102) of the joint device connection frame (101);
The composite part laminating device (201) and the cord fabric stitching device (301) are alternatively located on the vertical center line of the tire body drum (402).

9. The joint treatment method for the tire forming machine according to claim 8, **characterized in that** two pairs of hydraulic buffers (109) are arranged at the side part of the main bracket (102) of the joint device connection frame (101) to limit the displacement distances of the composite part laminating device (201) and the cord fabric stitching device (301) along the longitudinal direction.

10. The joint treatment method for the tire forming machine according to claim 9, **characterized by** comprising the implementation steps as follows:
The joint device connection frame (101) slides along the axial direction of the portal frame (401), and is located above the vertical direction of the tire body drum (402);
the composite part laminating device (201) is arranged on the vertical center line of the tire body drum (402); the compression roller component (200) descends to the composite workstation at one side end of the tire body drum (402) along the vertical direction, and moves to the other side end of the tire body drum (402) along the axial direction, so as to finish the laminating operation on the inside liner and the tire side rubber;
The compression roller component (200) ascends to the initial position along the vertical direction;
The second cylinder (108) pushes the lateral connection frame (103) to longitudinally move, so as to locate the cord fabric stitching device (301) on the vertical center line of the tire body drum (402);
The stitching wheel component (300) descends to the stitching workstation of the tire body drum (402) along the vertical direction, and moves in the reciprocating manner along the axial direction of the tire body drum (402), so as to finish the joint stitching operation on the tire body cord fabric;
The stitching wheel component (300) ascends to the initial position along the vertical direction;
The joint device connection frame (101) reversely slides to the initial position along the axial direction of the top portal frame (401);
The second cylinder (108) reversely pushes the lateral connection frame (103) along the longitudinal direction, so as to enable the composite part laminating device (201) and the cord fabric stitching device (301) to slide to the initial positions.
